Europäisches Patentamt

European Patent Office

Office européen des brevets

(19)

(11) Publication number: **0 062 517**

**A1**

(12) **EUROPEAN PATENT APPLICATION**

(21) Application number: **82301767.8**

(22) Date of filing: **02.04.82**

(51) Int. Cl.³: **B 23 K 26/06**

(30) Priority: **03.04.81 GB 8110567**

(43) Date of publication of application: **13.10.82**
Bulletin 82/41

(84) Designated Contracting States: **DE FR GB IT SE**

(71) Applicant: **THE WELDING INSTITUTE, Abington Hall, Abington Cambridge CB1 6AL (GB)**

(72) Inventor: **Crafer, Roger C., 28 Edinburgh Avenue, Sawston Cambridgeshire CB2 4DP (GB)**
Inventor: **Oakley, Peter J., 44 High Street, Fen Ditton Cambridge CB5 8ST (GB)**

(74) Representative: **Abbott, Leonard Charles et al, GILL JENNINGS & EVERY 53/64 Chancery Lane, London WC2A 1HN (GB)**

(54) Heat treatment of workpiece by laser.

(57) Laser apparatus is disclosed which is suitable for example for transformation hardening, surface melting, alloying and cladding. A transmissive element (1), known as an «Axicon» element, focusses an incident laser beam onto a workpiece surface, and different intensity distributions may be selected by adjusting the separation of the element (1) and the workpiece. For example, a sharply-focused annulus may be formed in plane «B». The transmissive element (1) has convex spherical and convex conical faces. In alternative forms of the invention, there are two elements whose separation may be adjusted, for example plano/ spherical convex and plano/conical convex elements.

ACTORUM AG

The Welding Institute — 1 — GJE/3082/31

## HEAT TREATMENT OF WORKPIECE
## BY LASER

This invention relates to laser apparatus for heating workpieces.

One type of laser, known as the axial flow laser, has been widely used for welding and cutting workpieces. As an example, we have used a carbon dioxide laser, for which a relatively long column is required between a highly reflective mirror and a partially transmissive mirror. The beam which passes through the partially transmissive mirror has a predominantly Gaussian cross-sectional intensity profile and the beam distribution is also evident in a focused beam. However, such a beam can be unsuitable for heat treatment processes such as transformation hardening, surface melting, cladding and alloying of surfaces. In transformation hardening, for example, it produces a nonuniform depth of hardening, and undesirable surface melting can occur near the intense centre of the beam.

In another type of laser, the beam column is much shorter and there is a highly reflecting plane or curved mirror at either end of the column. One of these mirrors is of a diameter such that a part of the beam can escape from the column around the mirror. Such an emitted beam has an annular intensity distribution and, when it is used for heat treatment, this distribution is also evident. This beam distribution also is not ideal for some applications in heat treatment.

According to the present invention, apparatus for heat treating workpieces comprises a laser generating a beam, and is characterized by: an optical device through which the beam passes and which comprises a plano-spherical convex lens element and a plano-conical convex lens element, or one or more lens elements having surfaces which together produce the effect of the plano-spherical and plano-conical convex lens elements; and positioning means for selecting the relative position of the optical device and the workpiece along, or near to, the optical axis of the optical device.

The optical device may consist of only one lens element, with convex spherical and convex conical surfaces. Alternatively, the one lens element has one surface which is a surface of revolution of a circular arc ending on the optical axis, a centre of curvature of the arc lying off that axis. However, the optical device may comprise a plano-spherical convex element and a plano-conical element in combination with means for adjusting their position relative to each other and the workpiece, along or near to the said optical axis.

The positioning means may comprise a preset spacer, interposed between the optical device and the workpiece. Alternatively, the positioning means comprises a continuously adjustable spacer, such as a precision slide mechanism.

In common with other optical devices associated with high power carbon dioxide lasers, the transmissive elements, i.e. the lens elements, are advantageously made of potassium chloride or zinc selenide.

An apparatus of this type gives significant advantages when using a laser with a predominantly Gaussian cross-sectional intensity profile for surface treatments, and also some advantage with a laser giving other cross-sectional intensity profiles. By placing a workpiece at different axial distances from the optical device for example, the cross-sectional intensity profile of the beam as it is incident on the workpiece can be either a sharply-focused annulus, a smaller annulus with a softer focus, or a filled circle. Any of these intensity distributions can be offset or biased in one direction by changing the angle of incidence of the laser beam onto the optical device, so that the beam axis is no longer parallel to the optical axis of the optical device. These different beam distributions can be used selectively for different kinds of surface heat treatment. One particularly useful form of beam distribution is an annulus with a small hollow centre as the diffusion of heat towards the centre of the workpiece surface provides a substantially uniform heat distribution when the laser apparatus traverses a workpiece. A stationary annular ring is suitable for transformation hardening, alloying or cladding a circular component e.g. a valve seat for an i.c. engine. The diameter of these annuli may be varied by using, for example, two discrete optical elements and adjusting their separation. If the position of the spherical surface relative to the workpiece is unchanged, the annulus remains sharply focused; the diameter of the annulus may then be varied independently by moving the element with a conical surface, for example.

In order that the invention may be better understood, some embodiments of the invention will now be described with refence to the accompanying drawings, of which:-

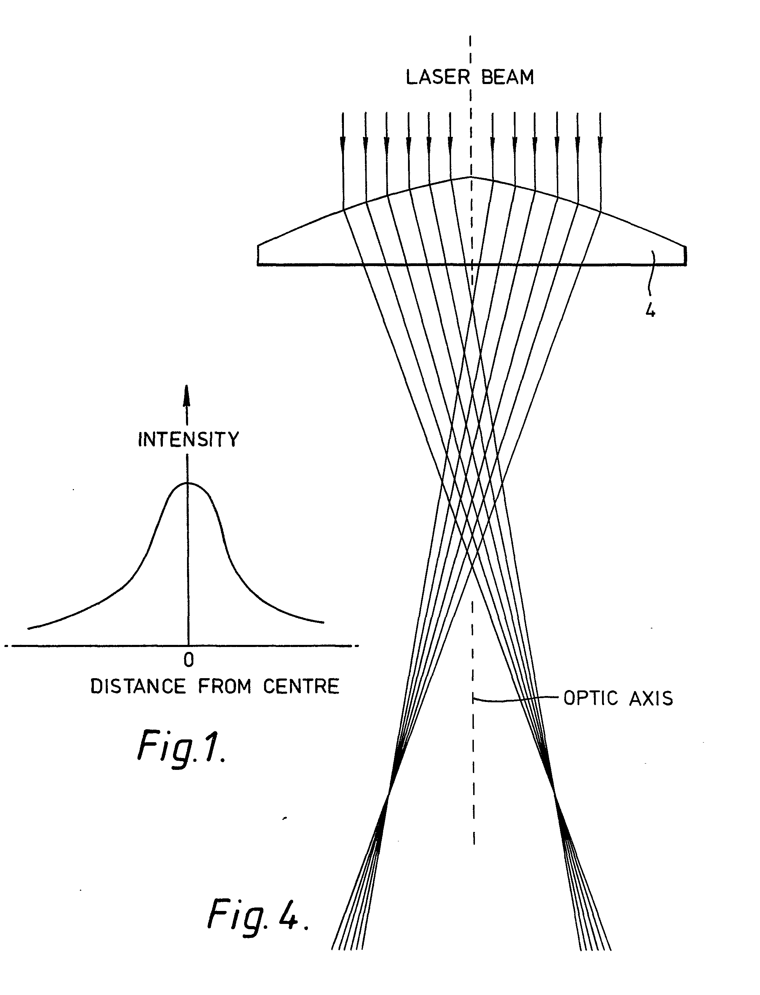

Figure 1 illustrates a roughly Gaussian profile of the beam from a laser in apparatus embodying the present invention;

Figure 2 illustrates the effect of the beam-shaping optical device comprising a convex-spherical and a convex-conical optical element;

Figures 3A and 3B illustrate the variations in annular diameter that can be achieved using two elements in combination;

Figure 4 illustrates a single lens element of which one face is a surface of revolution of a circular arc ending on the optical axis;

Figure 5A illustrates the effect of a conventional defocussed laser beam on a steel surface; and

Figure 5B illustrates the improvement using one form of the invention, on the same workpiece as in Figure 5A.

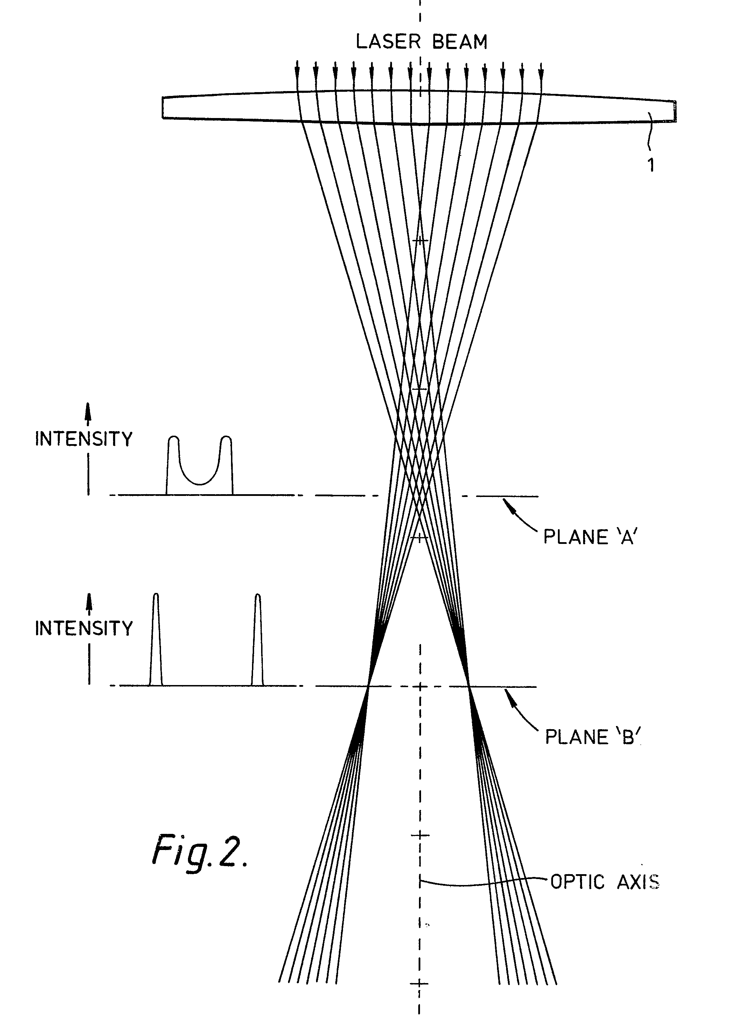

Figure 2 illustrates by means of a schematic ray diagram the passage of a laser beam through a convex-spherical/convex-conical element 1, whose optic axis is shown in dotted lines. The cross-sectional profile of the beam as it emerges from the element is shown at two different points along the axis. In plane "A" there is a filled circle; in plane "B" there is a sharply-focused annulus. Either of these intensity profiles can be made to be incident on the surface of a workpiece by the suitable positioning of the workpiece relative to the optical device. This can be effected by means of a preset spacer (not shown) interposed between the element 1 and the workpiece. Alternatively, the positioning can be made continuously adjustable by using a precision slide mechanism or telescopic tubes, the relative motion being provided by a lead screw mechanism or a rack and pinion, and controlled manually or by an automatic control system, e.g. electrical or hydraulic.

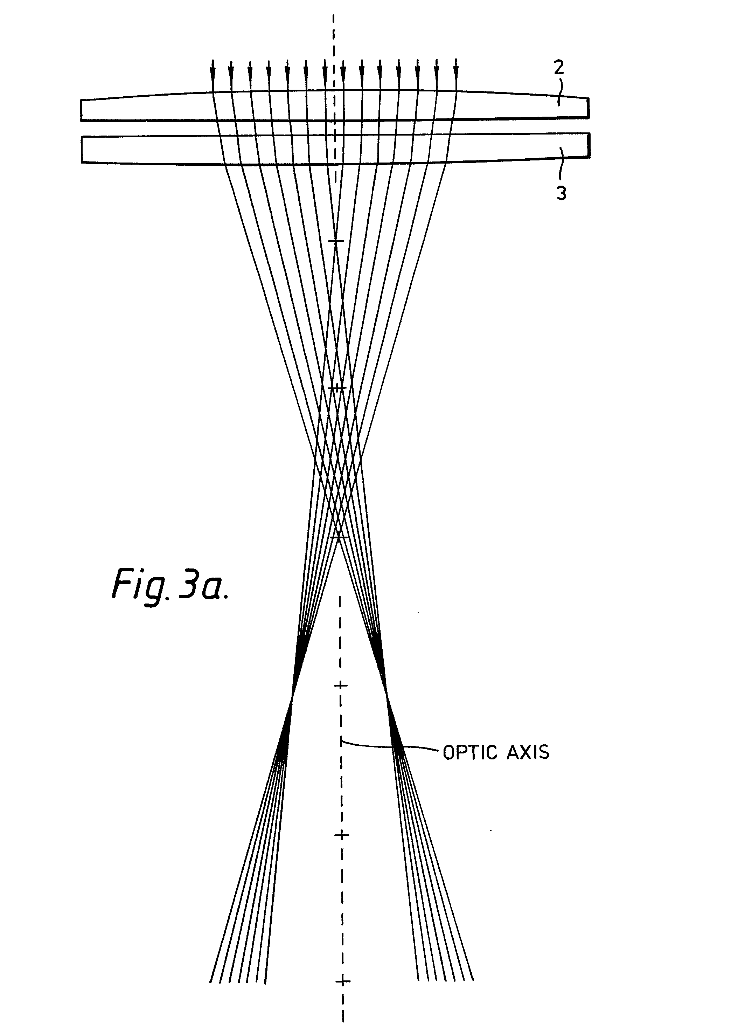

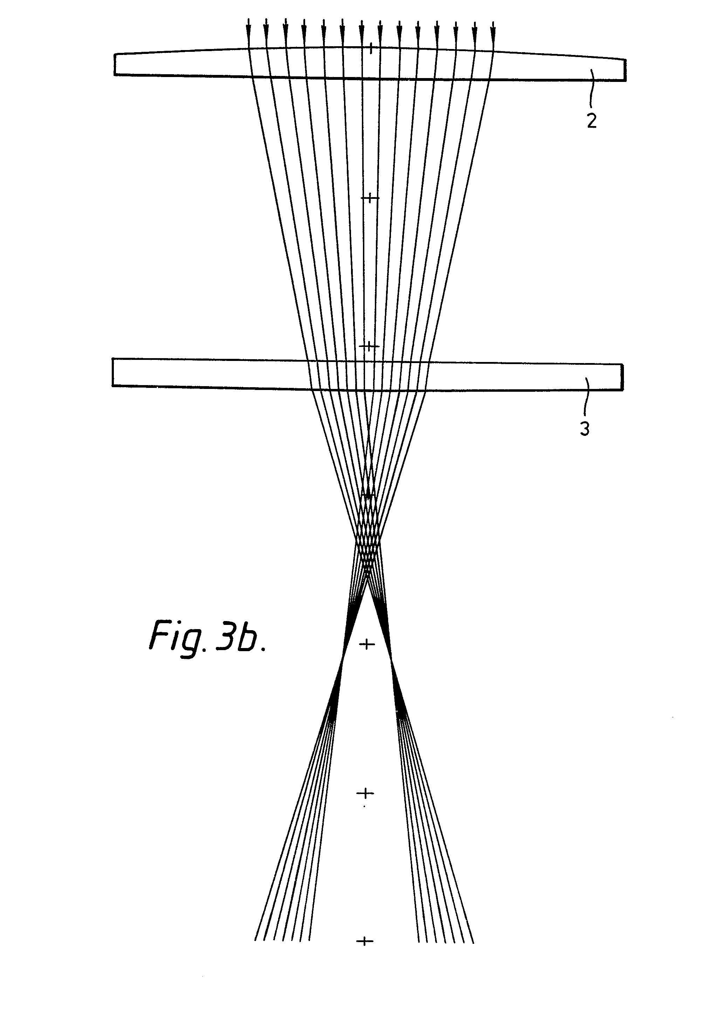

Figure 3 illustrates schematically a two-element optical device, in which not only the distance from the spherical lens element to the workpiece can be varied, but also the distance between the two elements can be varied. In Figure 3A and 3B, a plano/spherical convex element 2 remains stationary with respect to the position of a workpiece placed in the plane of a sharply focused annulus. A plano-conical convex element 3 is movable along the optic axis of the compound lens. The diameter of the sharply-focussed annulus differs, due to the different separation of the two elements. In Figure 3A the two elements are close together, and there is a wide annulus sharply focused on the workpiece. In Figure 3B the two elements are separated, causing the sharply focused annulus to have a smaller diameter. The workpiece could of course instead be placed at any other axial position relative to the spherical element, and the diameter of the intensity profile could be varied in exactly the same way by moving the conical element.

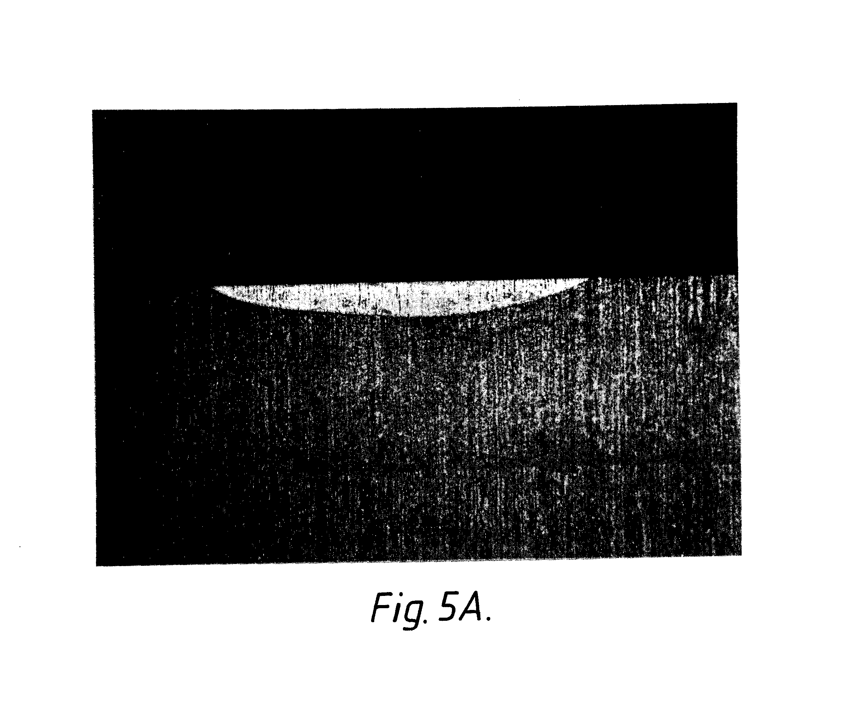

Figure 4 shows a final embodiment of the optical device of the invention, consisting of a single element 4, in which the spherical and conical surfaces are combined into a single surface, one face of which may be described as being a surface revolution of a circular arc ending on the optical axis, the centre of curvature of which does not lie on that axis. In this particular example, the circular arc and its centre of curvature lie on opposite sides of the optical axis. The other surface of the lens element is planar. The element may be moved axially with respect to the workpiece, or vice versa, in order to change the intensity profile incident on the surface of the workpiece, in a manner described above.

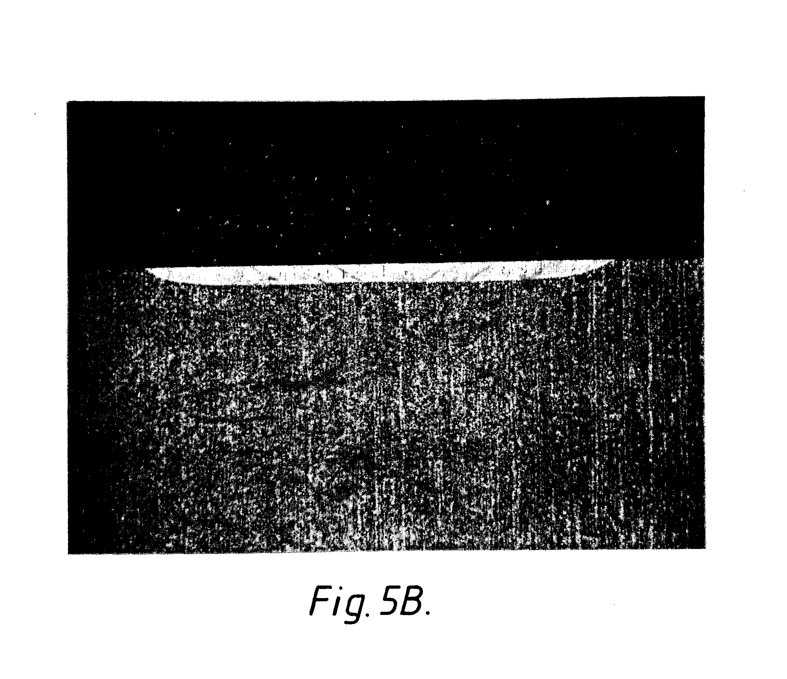

The use of the invention for laser transformation hardening 0.45%C steel is illustrated in Figure 5B, which is enlarged fifteen times (x15). The power of the laser was 2.0kW, with a traverse speed of 3.0 metres per minute $(0.05ms^{-1})$. This even hardening compares favourably with the result, shown in Figure 5A, of using a conventional defocussed laser beam, also 2.0kW, on the same steel workpiece. The traverse speed in this case was 1.25 metres per minute $(0.021ms^{-1})$. Even using apparatus of the type shown in Figures 2, 3 or 4, slight melting is sometimes visible on the surface of the specimen, which can be unacceptable for some transformation-hardened components, but it is possible to avoid this and still provide a good depth of hardening by suitable adjustment of the operating parameters.

A different beam-shaping device, while still within the scope of the invention as described above, may produce different beam profiles, and those illustrated in the drawings are approximate and are intended only as illustrations.

CLAIMS

1.      Apparatus for heat treating workpieces comprising
a laser generating beam, and characterized by: an optical
device through which the beam passes and which comprises a
plano-spherical convex lens element (2) and a plano-conical
convex lens element (3), or one or more lens elements (1;4)
having surfaces which together produce the effect of the
plano-spherical and plano-conical convex lens elements;
and positioning means for selecting the relative position
of the optical device and the workpiece along, or near to,
the optical axis of the optical device.

2.      Apparatus in accordance with claim 1, wherein the
optical device consists of only one lens element (1), with
convex spherical and convex conical surfaces.

3.      Apparatus in accordance with claim 1, wherein the
optical device comprises a plano-spherical convex element (2)
and a plano-conical element (3) in combination with means
for selecting their position relative to each other and the
workpiece, along or near the said optical axis.

4.      Apparatus in accordance with claim 1, wherein the
optical device consists of only one element (4), one surface
of which is a surface of revolution of a circular arc ending
on the optical axis, a centre of curvature of the arc
lying off that axis.

5.      Apparatus in accordance with claim 4, wherein the other
surface of the lens element (4) is planar.

6.      Apparatus in accordance with any preceding claim,
further comprising means for adjusting the angle of incidence
of the laser beam on the optical device, in order to offset
the resultant intensity distribution.

7.      Apparatus in accordance with any preceding claim,
wherein the laser is a carbon dioxide laser.

8.      Apparatus in accordance with claim 7, wherein the
transmissive elements are made of potassium chloride or
zinc selenide.

LASER BEAM

4

INTENSITY

0

DISTANCE FROM CENTRE

Fig.1.

OPTIC AXIS

Fig.4.

0062517

LASER BEAM

INTENSITY

INTENSITY

PLANE 'A'

PLANE 'B'

*Fig.2.*

OPTIC AXIS

1

0062517

2

3

Fig. 3a.

OPTIC AXIS

4|6

0062517

Fig. 3b.

0062517

*Fig. 5A.*

*Fig. 5B.*

European Patent
Office

**EUROPEAN SEARCH REPORT**

Application number

EP 82 30 1767

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-A-2 348 025 (THORN ELECTR. INDUSTR.)<br>*Page 3, paragraph 6 to page 4, paragraph 5; figure 1* | 1,7 | B 23 K 26/06 |
| Y | US-A-3 463 898 (TAKASHI TAKAOKA)<br>*Column 8, lines 15-60; figure 9* | 1,2 | |
| A | US-A-3 419 321 (BARBER)<br>*Column 2, line 24 to column 3, line 25; figures 1 to 3* | 1,3 | |

| TECHNICAL FIELDS SEARCHED (Int. Cl. ³) |
|---|
| B 23 K 26/00 |

The present search report has been drawn up for all claims

| Place of search<br>THE HAGUE | Date of completion of the search<br>12-07-1982 | Examiner<br>DEMOLDER J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82